Europäisches Patentamt

European Patent Office

Office européen des brevets

(11) Veröffentlichungsnummer: **0 080 768**
**A2**

## (12) EUROPÄISCHE PATENTANMELDUNG

(21) Anmeldenummer: 82201487.4

(22) Anmeldetag: 23.11.82

(51) Int. Cl.³: **G 01 K 7/22**

(30) Priorität: 26.11.81 DE 3146909

(43) Veröffentlichungstag der Anmeldung:
08.06.83 Patentblatt 83/23

(84) Benannte Vertragsstaaten:
DE FR GB IT

(71) Anmelder: Philips Patentverwaltung GmbH
Steindamm 94
D-2000 Hamburg 1(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
FR GB IT

(72) Erfinder: Ewaldt, Helmut
Hammerstrasse 5
D-2000 Hamburg 70(DE)

(72) Erfinder: Sauermann, Heinz
Rotdornstieg 15
D-2083 Halstenbek(DE)

(72) Erfinder: Hoffmann, Norbert
Theodor-Stormweg 26
D-2110 Buchholz(DE)

(72) Erfinder: Raabe, Gerhard
Elsa Brandströmstrasse 7
D-2000 Hamburg 70(DE)

(74) Vertreter: David, Günther M. et al,
Philips Patentverwaltung GmbH Steindamm 94
D-2000 Hamburg 1(DE)

(54) **Temperatursensor.**

(57) Temperatursensor in Form eines temperaturabhängigen, nach dem Stromausbreitungsprinzip arbeitenden Halbleiterwiderstandes mit einem Halbleiterkörper 1, der an seiner Unterseite mit einer gut leitenden Schicht 13, und an seiner Oberseite mit einer ersten 2 und einer zweiten 3 sperrfreien Kontaktzone versehen ist, die mit Anschlußleitern 10, 11 verbunden sind. Bei solchen Temperatursensoren kann auf einfache Weise erreicht werden, daß alle gefertigten Sensoren innerhalb eines vorgegebenen (eng tolerierten) Widerstandsbereiches (z.B. 1000Ω± 1 %) liegen, auf ein Aussortieren also verzichtet werden kann.

Dies wird dadurch erreicht, daß auf der Oberseite des Halbleiterkörpers 1 mindestens eine weitere Kontaktzone 4 bis 8 unterschiedlich großer Fläche ausgebildet ist und daß mindestens eine der weiteren Kontaktzonen mit der zweiten Kontaktzone 3 verbunden ist.

Ein solcher Temperatursensor kann vorteilhaft so hergestellt werden, daß nach dem Ausbilden der sperrfreien Kontaktzonen 2 bis 8 der Widerstand zwischen mindestens der ersten Kontaktzone 2 und der leitenden Schicht 13 gemessen wird und dann zwei Kontaktzonen miteinander verbunden werden, die so ausgewählt sind, daß der Gesamtwiderstand des Temperatursensors zwischen den beiden mit Anschlußleitern 10, 11 versehenen Kontaktzonen 2, 3 bei einer Bezugstemperatur innerhalb eines vorgegebenen Widerstandsbereiches liegt.

Fig.1

Temperatursensor

Die Erfindung betrifft einen Temperatursensor in Form eines temperaturabhängigen, nach dem Stromausbreitungsprinzip arbeitenden Halbleiterwiderstandes mit einem Halbleiterkörper, der an seiner Unterseite mit einer gut leitenden Schicht und an seiner Oberseite mit einer ersten und einer zweiten sperrfreien Kontaktzone versehen ist, die mit Anschlußleitern verbunden sind.

Ein Temperatursensor dieser Art ist z.B. aus der EP-OS 00 28 387 bekannt.

Ein solcher Temperatursensor besteht praktisch aus zwei in Serie geschalteten temperaturabhängigen Halbleiterwiderständen.

Die Widerstandswerte der Einzelwiderstände sind dabei durch den spezifischen Widerstand des Halbleitermaterials, die Fläche bzw. den Durchmesser der sperrfreien Kontaktzonen, die Eindringtiefe dieser Kontaktzonen in den Halbleiterkörper und dessen Dicke, bestimmt.

Bei der Massenherstellung solcher Sensoren werden die genannten Größen, insbesondere die Dotierung der Kontaktzonen, etwas streuen, so daß die Widerstandswerte der gefertigten Sensoren (bei einer Bezugstemperatur, z.B. 25°C) um einen Mittelwert streuen.

Werden nun Sensoren verlangt, bei denen der Sollwiderstand nur um einen sehr geringen Prozentsatz (z.B. $\pm$ 1 %) um einen vorgegebenen Wert (von z.B. 1000 Ohm) streuen darf, so ist es erforderlich, aus den gefertigten Temperatursensoren diejenigen mit großem Aufwand und geringer Ausbeute auszusortieren, deren Widerstandswert innerhalb des genannten
Toleranzbereiches liegt.

Der Erfindung liegt nun die Aufgabe zugrunde, einen Temperatursensor der eingangs genannten Art so auszugestalten,
daß auf einfache Weise erreicht werden kann, daß alle gefertigten Temperatursensoren innerhalb eines vorgegebenen
(eng tolerierten) Widerstandsbereiches (z.B. 1000 $\Omega \pm$ 1 %)
liegen, auf ein Aussortieren also verzichtet werden kann.

Diese Aufgabe wird erfindungsgemäß dadurch gelöst, daß auf
der Oberseite des Halbleiterkörpers mindestens eine weitere
Kontaktzone unterschiedlich großer Fläche ausgebildet ist
und daß mindestens eine der weiteren Kontaktzonen mit der
zweiten Kontaktzone verbunden ist.

Bei einem so ausgestalteten Temperatursensor ist es somit
möglich, einen der beiden in Serie geschalteten Teilwiderstände des Sensors durch eine Parallelschaltung der beiden
Widerstände zwischen der zweiten sperrfreien Kontaktzone
und der gut leitenden Schicht sowie zwischen einer weiteren
sperrfreien Kontaktzone und der gut leitenden Schicht auszubilden.
Da die weiteren Kontaktzonen unterschiedlich große Flächen
haben und damit die zwischen diesen Kontaktzonen und der
gut leitenden Schicht gebildeten Widerstände unterschiedlich groß sind, kann durch die Parallelschaltung entsprechend
ausgewählter Teilwiderstände ein Gesamtwiderstand des
Temperatursensors erreicht werden, der innerhalb eines vorgegebenen (eng tolerierten) Widerstandsbereiches liegt.

Entsprechend ist ein Verfahren zum Herstellen eines Temperatursensors der eingangs genannten Art dadurch gekennzeichnet, daß nach dem Ausbilden der sperrfreien Kontaktzonen der Widerstand zwischen mindestens der ersten Kontaktzone und der leitenden Schicht gemessen wird und dann zwei Kontaktzonen miteinander verbunden werden, die so ausgewählt sind, daß der Gesamtwiderstand des Temperatursensors zwischen den beiden mit Anschlußleitern versehenen Kontaktzonen bei einer Bezugstemperatur innerhalb eines vorgegebenen Widerstandsbereiches liegt.

Weitere Ausgestaltungen der Erfindung ergeben sich aus den Unteransprüchen.

Die Erfindung wird im folgenden anhand der beigefügten Zeichnung an einem Ausführungsbeispiel näher erläutert. Es zeigen:

Fig. 1          einen Schnitt durch einen Temperatursensor nach der Erfindung,

Fig. 2          eine Draufsicht auf den Temperatursensor nach Fig. 1,

Fig. 3          das elektrische Ersatzschaltbild des in den Fig. 1 und 2 dargestellten Temperatursensors.

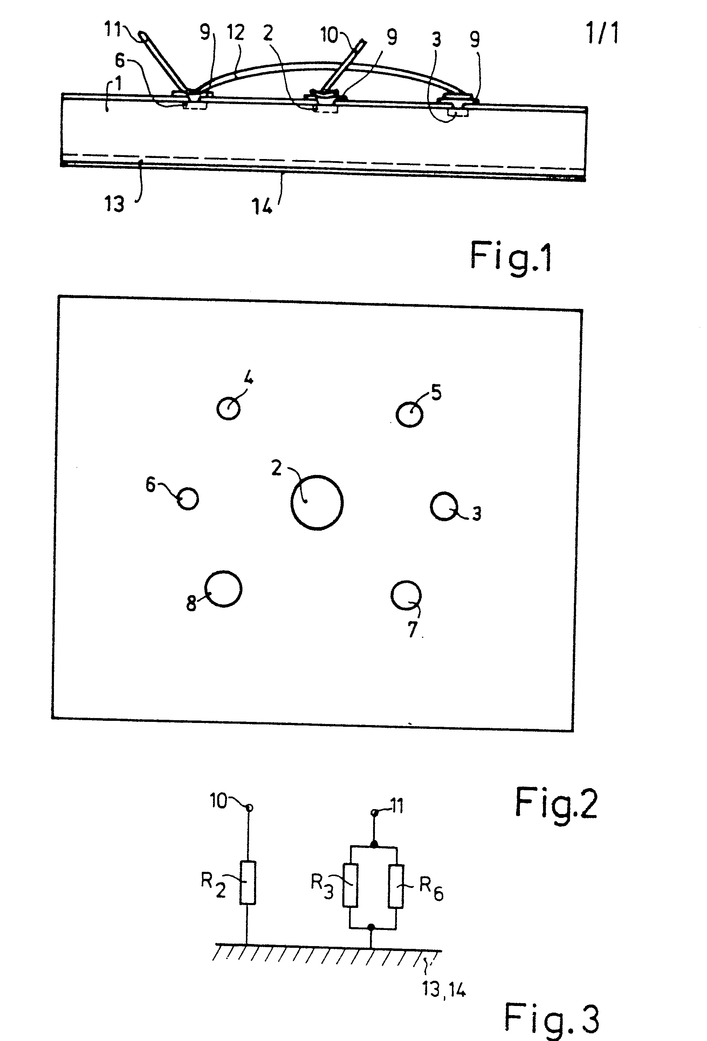

Fig. 1 zeigt einen Schnitt durch einen Temperatursensor nach der Erfindung. Dieser Temperatursensor besteht im wesentlichen (das umhüllende Gehäuse etc. ist nicht dargestellt) aus einem Halbleiterkörper 1 von einem Leitungstyp, der an der Oberseite mit sperrfreien Kontaktzonen 2 bis 8 vom gleichen Leitungstyp und an der Unterseite mit einer gut leitenden Schicht 13 ebenfalls vom gleichen Leitungstyp, versehen ist.

Wie die Draufsicht in Fig. 2 erkennen läßt, haben die Kontaktzonen einen kreisförmigen Querschnitt. Die Kontaktzonen 2 bis 8 sind mit ebenfalls kreisförmigen (in Fig. 2 nicht dargestellten) Kontaktmetallisierungen 9 bedeckt. Die gut leitende Schicht 13 an der Unterseite des Halbleiterkörpers ist ebenfalls mit einer gut leitenden Metallschicht 14 bedeckt. Mit der Kontaktmetallisierung 9 über der ersten Kontaktzone 2 ist ein erster Anschlußleiter 10, und mit der Kontaktmetallisierung 9 über der zweiten Kontaktzone 3 ist ein zweiter Anschlußleiter 11 verbunden.

Zwischen der ersten Kontaktzone 2 und der gut leitenden Schicht 13 an der Unterseite des Halbleiterkörpers ist ein erster, in dem Ersatzschaltbild in Fig. 3 dargestellter Teilwiderstand $R_2$ des Temperatursensors ausgebildet. Mit diesem Teilwiderstand $R_2$ ist zunächst ein weiterer, zwischen der zweiten Kontaktzone 3 und der gut leitenden Schicht ausgebildeter Teilwiderstand $R_3$ in Serie geschaltet. Da, wie eingangs erläutert, der Widerstandswert der einzelnen Widerstände durch die Fläche, d.h. hier den Durchmesser der Kontaktzone mitbestimmt wird, sind diese so gewählt, daß sich zwischen der ersten Kontaktzone 2 und der gut leitenden Schicht 13 ein Widerstand ergibt, der etwa der Hälfte des Gesamtwiderstandes des Temperatursensors entspricht. Die Fläche der zweiten Kontaktzone 3 ist dagegen so groß gewählt, daß der sich zwischen ihr und der gut leitenden Schicht 13 ergebende Widerstand in der Größenordnung des Gesamtwiderstandes des Temperatursensors liegt. Die Flächen der weiteren Kontaktzonen 4 bis 8 sind nun zusammen mit der Fläche der zweiten Kontaktzone 3 so abgestimmt, daß durch die Parallelschaltung von zwei der mit diesen Kontaktzonen gebildeten Teilwiderstände, d.h. die Verbindung zweier dieser Kontaktzonen, sich für den zweiten durch diese Parallelschaltung gebildeten Serienwiderstand des Temperatursensors ein Wert einstellen läßt, der zusammen mit dem Wert des ersten Serienwiderstandes ($R_2$ den gewünschten, innerhalb des vorgegebenen Widerstandsbereiches liegenden Widerstandswert ergibt.

In den Fig. 1 und 3 ist dargestellt, daß dieser gewünschte Wert dadurch erreicht wird, daß die weitere Kontaktzone 6 mit der zweiten Kontaktzone 3 verbunden ist, wobei die Widerstandswerte, die sich im Rahmen der üblichen Fertigungsstreuung für die Teilwiderstände $R_2$, $R_3$ und $R_6$ ergeben haben, gerade so groß sind, daß der sich aus der Parallel- und Serienschaltung ergebende Gesamtwiderstand innerhalb des gewünschten Widerstandsbereiches liegt.

Um eine hinreichend große Auswahl für die Parallelschaltung zum Erreichen des gewünschten Widerstandswertes zur Verfügung zu haben, sind im vorliegenden Ausführungsbeispiel fünf weitere Kontaktzonen 4 bis 8 vorgesehen, deren Durchmesser, ausgehend von der zweiten Kontaktzone 3, jeweils um $\pm$ 10% voneinander abweichen. Bei der Herstellung eines solchen Temperatursensors wird man nun den Widerstand zwischen mindestens der ersten Kontaktzone 2 und der gut leitenden Schicht 13 messen. Damit liegen auch die Teilwiderstände zwischen der zweiten Kontaktzone 3 und den weiteren Kontaktzonen 4 bis 8 und der gut leitenden Schicht 13 fest, da ja bei konstantem Widerstand des Halbleiterkörpers und konstanter Dicke des Halbleiterkörpers und Eindringtiefe der Kontaktzone die Widerstandswerte lediglich durch die festgelegten Durchmesser der Kontaktzonen bestimmt sind.

In Kenntnis dieser Widerstandswerte ist es dann leicht möglich, mit Hilfe einer einfachen Berechnung die beiden Kontaktzonen (aus den Kontaktzonen 3 bis 8) auszuwählen, die miteinander verbunden werden müssen, damit der sich aus ihrer Parallelschaltung ergebende Widerstand in Summe mit dem durch die Kontaktzone 2 bestimmten Widerstand $R_2$ einen Gesamtwiderstand ergibt, der innerhalb des vorgegebenen Widerstandsbereiches liegt.

Die bei einer Streuung der Widerstandswerte auftretenden Verhältnisse lassen sich wie folgt an einem Zahlenbeispiel erläutern: Die sieben Kontaktzonen 2 - 8 bilden Teilwiderstände $R_2$ bis $R_8$, deren Widerstandsverhältnis zueinander durch die Durchmesser der Kontaktzonen, die durch eine

Maske definiert werden und daher relativ zueinander nicht streuuen, bestimmt ist. Nimmt man an, daß $R_2$ einen Wert von 500 Ohm hat, der diffusionsbedingt - und mit ihm dann auch die Werte der Widerstände $R_3$ bis $R_8$ - um $\pm$ 5% schwanken kann, so werden die Durchmesser der Kontaktzonen 3 bis 8 und damit die Werte der Widerstände $R_3$ bis $R_8$ z.B. so gewählt, daß sich folgende Teilwiderstände ergeben (jeweils ihn Ohm):

| Streuung | 0% | + 5% | - 5% |
|----------|------|------|------|
| $R_2$ | 500 | 525 | 475 |
| $R_3$ | 1150 | 1208 | 1093 |
| $R_4$ | 1100 | 1155 | 1045 |
| $R_5$ | 1050 | 1103 | 998 |
| $R_6$ | 950 | 998 | 903 |
| $R_7$ | 900 | 945 | 855 |
| $R_8$ | 850 | 893 | 808 |

Zeigt sich nun, daß $R_2$ an der unteren Grenze (-5%) liegt, also einen Wert von 475 Ohm hat, so läßt sich errechnen, daß von den Widerständen $R_3$ bis $R_8$ - die dann die für eine Streuung -5% angegebenen Werte haben, die Widerstände $R_3$ und $R_5$ ausgewählt werden können, deren Parallelschaltung dann einen Widerstandswert von 521,7 Ohm ergibt, was in Serie mit dem Widerstand von $R_2$ (475 Ohm) einen Gesamtwiderstand von 996,7 Ohm ergibt, der für diesen Grenzfall also um weniger als 0,4% von dem gewünschten Wert von 1000 Ohm abweicht.

Es lassen sich also für die gewählten Durchmesser der Kontaktzonen 3 bis 8 innerhalb eines Streubereiches von $\pm$ 5% Kombinationen von Widerständen aus $R_3$ bis $R_8$ finden, die zusammen mit $R_2$ zu einem um weniger als 0,5% von 1000 Ohm abweichenden Widerstandswert führen.

Bei dem in den Figuren gezeigten Ausführungsbeispiel sind dies (bei einer anderen Streuung als in dem eben gegebenen Zahlenbeispiel) die Kontaktzonen 3 und 6, die dann mit Hilfe eines Verbindungsleiters 12 miteinander verbunden werden müssen.

Die Anschlußleiter 10 und 11 sowie der Verbindungsleiter 12 zwischen den miteinander zu verbindenden Kontaktzonen kann mit Hilfe des Thermokompressionsverfahrens hergestellt werden, dazu ist die diese Verbindungen herstellende Vorrichtung, der sog. Bonder, so ausgebildet, daß er zunächst den Widerstand zwischen der ersten Kontaktzone 2 und der gut leitenden Schicht 13 mißt, aus diesem Widerstand unter Berücksichtigung der Abmessungen der weiteren Kontaktzonen in Bezug zu der ersten Kontaktzone oder durch Messung der Teilwiderstände zwischen den weiteren Kontaktzonen und der gut leitenden Schicht 13, die zur Erreichung eines vorgegebenen Widerstandswertes miteinander zu verbindenden Kontaktzonen ermittelt und dann die erforderliche Verbindung 12 sowie die Anschlußleiter 10 und 11 anbringt.

Dabei ist selbstverständlich die Temperatur des Halbleiterkörpers zu berücksichtigen, da der einzustellende Endwiderstand des Temperatursensors für eine bestimmte Bezugstemperatur (z.B. 25°C) gilt.

Dies kann entweder dadurch geschehen, daß der Halbleiterkörper des Temperatursensors während der Messung der Teilwiderstände auf dieser Bezugstemperatur gehalten wird oder dadurch, daß in der Vorrichtung im thermischen Kontakt mit dem zu kontaktierenden Temperatursensor ein Temperatursensor gleicher Bauart mit bekanntem Widerstand in einer Brückenschaltung angeordnet ist, deren Verstimmung dann bei der Errechnung der zu bildenden Verbindungen zwischen den Kontaktzonen berücksichtigt wird.

Der Halbleiterkörper des beschriebenen Temperatursensors kann wie folgt hergestellt werden.

Es wird ausgegangen von einer 250 µm dicken Scheibe aus neutronendotiertem, N-leitendem Silicium mit einem spezifischen Widerstand von 5 Ω cm.

Jedes der Einzelelemente, in die später die Scheibe geteilt wird, hat eine Fläche von 800 /um x 900 /um. Die Scheibe wird zunächst bei einer Temperatur von $1100^\circ C$ in $H_2O_2$ über 80 min thermisch oxidiert, wobei sie sich mit einer Oxidschicht von etwa 0,7 /um Dicke bedeckt. In diese Oxidschicht werden dann mit Hilfe einer Maske Fenster für die Kontaktzonen 2 bis 8 eingeätzt, die so gewählt sind, daß die erste Kontaktzone 2 einen Durchmesser von 40 /um und die weiteren Kontaktzonen 3 bis 8 Durchmesser von 17,4 /um, 18,2 /um, 19,0 /um, 21,0 /um, 22,2 /um und 23,5 /um erhalten. Zur Herstellung der Kontaktzonen wird dann Phosphor mit einer Konzentration von $> 10^{19}$ Atome/$cm^3$ bis zu einer Tiefe von 1 bis 5 /um eindiffundiert. Die Eindiffusion geschieht bei Temperaturen von 1000 bis $1100^\circ C$ über 30 bis 40 min.

Dabei wird gleichzeitig in die Rückseite der Halbleiterscheibe die gut leitende Schicht 13 eindiffundiert. Anschließend werden die Oxidschichten abgeätzt, die sich über den Kontaktzonen 2 bis 8 und der gut leitenden Schicht 13 gebildet haben und der Widerstand zwischen der ersten Kontaktzone 2 und der Schicht 13 gemessen. Liegt dieser Widerstand noch oberhalb eines vorgegebenen Wertes, so kann durch eine Nachdiffusion in einer $N_2$-Atmosphäre die Eindringtiefe der Kontaktzonen und der Schicht 13 erhöht und damit dieser Widerstand verringert werden.

Anschließend wird die Scheibe an ihrer Oberseite mit einer passivierenden Schicht aus $Si_3N_4$ bedeckt, was mit Hilfe des PECVD-Verfahrens (Plasma enhanced chemical vapour deposition) geschieht. Dann wird wieder die Fläche über den Kontaktzonen 2 bis 8 und der Schicht 13 freigelegt, und es werden die Metallisierungen 9 bzw. 14 aufgebracht. Die Metallisierungsschicht 9 über den Kontaktzonen 2 bis 8 bestehen aus kreisförmigen Flecken aus Aluminium oder TiPtAu mit einem Durchmesser von etwa 100 /um und einer Dicke von 1 bis 2 /um. Die Rückseite der Scheibe wird über der Schicht 13 mit einer etwa 0,1 % As enthaltenden Au-Schicht 14 von etwa 0,3 /um Dicke bedeckt.

Die Scheibe wird dann in die Einzelelemente zerteilt, die dann auf übliche Weise auf einem Trägerkörper, der den Teil eines Gehäuses bilden kann, aufgebracht werden und bei denen dann auf die oben beschriebene Art und Weise die Kontaktzonen so miteinander verbunden werden, daß sich ein innerhalb eines gewünschten, eng tolerierten Widerstandsbereiches liegender Gesamtwiderstand des Sensors ergibt.

Wird der Halbleiterkörper wie oben beschrieben hergestellt, beträgt der Gesamtwiderstand des Temperatursensors zwischen seinen Anschlüssen 10 und 11 (bei 25°C) 1000 $\Omega \pm$ 1 %. Dieser enge Toleranzbereich kann trotz der durch Fertigungstoleranzen bedingten Stauungen der Einzelwiderstände dank der Parallelschaltung von zwei oder mehr geeignet ausgewählten Teilwiderständen eingehalten werden.

Es ist selbstverständlich auch möglich, die Kontaktzonen 2 bis 8 so auszubilden, daß der Widerstand zwischen ihnen und der leitenden Schicht 13,    mehr als 2mal so groß (z.B. 3- oder 4mal so groß) ist wie der Widerstand zwischen der Kontaktzone 2 und der leitenden Schicht. In diesem Falle müssen dann mehr als 2 Kontaktzonen (z.B. 3 oder 4) miteinander verbunden werden, d.h. die entsprechenden Widerstände parallel geschaltet werden.

Patentansprüche:

1.          Temperatursensor in Form eines temperaturabhängigen, nach dem Stromausbreitungsprinzip arbeitenden
Halbleiterwiderstandes mit einem Halbleiterkörper (1), der
an seiner Unterseite mit einer gut leitenden Schicht (13)
und an seiner Oberseite mit einer ersten (2) und einer
zweiten (3) sperrfreien Kontaktzone versehen ist, die mit
Anschlußleitern (10, 11) verbunden sind,
           dadurch gekennzeichnet, daß auf der Oberseite
des Halbleiterkörpers (1) mindestens eine weitere Kontaktzone (4 bis 8) unterschiedlich  großer Fläche ausgebildet
ist und daß mindestens eine (z.B. 6) der weiteren Kontaktzonen mit der zweiten Kontaktzone (3) verbunden ist.

2.          Temperatursensor nach Anspruch 1, dadurch gekennzeichnet, daß die Flächen der zweiten (3) weiteren (4 bis
8) Kontaktzonen, von der kleinsten bis zur größten ansteigend, um einen bestimmten Prozentsatz voneinander abweichen.

3.          Temperatursensor nach Anspruch 1, dadurch gekennzeichnet, daß die Summe der Flächen der zweiten Kontaktzone (3) und der mit ihr verbundenen weiteren Kontaktzonen
(z.B. 6) annähernd gleich der Fläche der ersten Kontaktzone
(2) ist.

4.          Temperatursensor nach Anspruch 1, dadurch gekennzeichnet, daß mindestens zwei, vorzugsweise fünf weitere
Kontaktzonen (4 bis 8) vorhanden sind.

5.        Temperatursensor nach Anspruch 1, dadurch gekennzeichnet, daß der Halbleiterkörper (1) aus Silicium besteht.

6.        Temperatursensor nach Anspruch 5, dadurch gekennzeichnet, daß der Halbleiterkörper (1) aus neutronendotiertem, N-leitendem Silicium besteht.

7.        Temperatursensor nach Anspruch 1, dadurch gekennzeichnet, daß die Kontaktzonen (2 bis 8) kreisförmig
ausgebildet sind.

8.        Temperatursensor nach Anspruch 1, dadurch gekennzeichnet, daß die Kontaktzonen (2 bis 8) in den Halbleiterkörper eindiffundiert sind.

9.        Temperatursensor nach Anspruch 1, dadurch gekennzeichnet, daß der Abstand der Kontaktzonen (2 bis 8)
voneinander etwa der Dicke des Halbleiterkörpers entspricht.

10.        Verfahren zum Herstellen eines Temperatursensors nach Anspruch 1, dadurch gekennzeichnet, daß nach
dem Ausbilden der sperrfreien Kontaktzonen (2 bis 8) der
Widerstand zwischen mindestens der ersten Kontaktzone (2)
und der leitenden Schicht    (13) gemessen wird und dann
zwei Kontaktzonen (z.B. 3 und 6) miteinander verbunden
werden, die so ausgewählt sind, daß der Gesamtwiderstand
des Temperatursensors zwischen den beiden mit Anschlußleitern (10, 11) versehenen Kontaktzonen (2, 3) bei einer
Bezugstemperatur innerhalb eines vorgegebenen Widerstandsbereiches liegt.

11.        Verfahren nach Anspruch 10, dadurch gekennzeichnet, daß sowohl die Anschlußleiter (10, 11) als auch
die Verbindung(en) (12) zwischen den Kontaktzonen (3, 6) mit Hilfe des Thermokompressionsverfahrens hergestellt werden und die dazu dienende Vorrichtung so ausgebildet ist, daß sie den oder die Einzelwiderstände mißt, aus diesen Einzelwiderständen unter Berücksichtigung der Temperatur des Halbleiterkörpers die für einen vorgegebenen Widerstandsbereich erforderliche(n) Verbindung(en) zwischen der zweiten und mindestens einer weiteren Kontaktzone errechnet und dann diese Verbindungen sowie die Anschlußleiter anbringt.

12.          Verfahren nach Anspruch 8, dadurch gekennzeichnet, daß dann in der Vorrichtung im thermischen Kontakt mit dem zu kontaktierenden Temperatursensor ein Temperatursensor gleicher Bauart mit bekanntem Widerstand in einer Brückenschaltung angeordnet ist, deren Verstimmung bei der Errechnung der zu bildenden Verbindungen zwischen der zweiten und der bzw. den weiteren Kontaktzonen berücksichtigt wird.

Fig.1

Fig.2

Fig.3

PHD 81-128